(19)

Europäisches
Patentamt

European
Patent Office

Office européen
des brevets

(11)  EP 2 039 659 A1

(12)  **EUROPEAN PATENT APPLICATION**
published in accordance with Art. 153(4) EPC

(43) Date of publication:
    **25.03.2009   Bulletin 2009/13**

(21) Application number: **06767932.4**

(22) Date of filing: **06.07.2006**

(51) Int Cl.:
    ***C02F 3/34*** *(2006.01)*      ***C02F 3/10*** *(2006.01)*
    ***C02F 3/12*** *(2006.01)*

(86) International application number:
    **PCT/JP2006/313473**

(87) International publication number:
    **WO 2008/004292 (10.01.2008 Gazette 2008/02)**

(84) Designated Contracting States:
    **AT BE BG CH CY CZ DE DK EE ES FI FR GB GR
    HU IE IS IT LI LT LU LV MC NL PL PT RO SE SI
    SK TR**
    Designated Extension States:
    **AL BA HR MK RS**

(71) Applicant: **Hitachi Plant Technologies, Ltd.
    Chiyoda-ku
    Tokyo 101-0047 (JP)**

(72) Inventors:
    • **ABE, Naoki
      Chiyoda-ku, Tokyo 101-0047 (JP)**

    • **SUMINO, Tatsuo
      Chiyoda-ku, Tokyo 101-0047 (JP)**
    • **OOKUMA, Naoki
      Chiyoda-ku, Tokyo 101-0047 (JP)**
    • **NAKAYAMA, Yasunori
      Chiyoda-ku, Toyko 101-0047 (JP)**
    • **AOKI, Tadashi
      Chiyoda-ku, Toyko 101-0047 (JP)**

(74) Representative: **Grünecker, Kinkeldey,
    Stockmair & Schwanhäusser
    Anwaltssozietät
    Leopoldstrasse 4
    80802 München (DE)**

(54)   **INCLUSIVE IMMOBILIZATION SUPPORT, WASTEWATER DISPOSAL APPARATUS AND
       WASTEWATER DISPOSAL METHOD USING THE INCLUSIVE IMMOBILIZATION SUPPORT**

(57)    In the present invention, the entrapping immo-
bilization pellets satisfy conditions: (A) the deformation
rate expressed by $(H_0-H_1)/H_0$ is 70% or more, where the
thickness of the pellets before compression is $H_0$ and the
thickness of the pellets at the time the pellets are broken
by compression is $H_1$; and (B) the particle diameter falls
within the range of 0.1 to 1.5 mm. The entrapping immo-
bilization pellets are added to a biological treatment tank
having no screen and the entrapping immobilization pel-
lets discharged together with treated water to a solid-
liquid separation tank are returned to the biological treat-
ment tank by pumping. With this constitution, the entrap-
ping immobilization pellets are less broken even if they
are returned to the biological treatment tank by pumping,
a conventional biological treatment tank in which waste-
water is treated with activated sludge can be used without
modification, and in addition, the particle diameter thereof
can be reduced. Therefore, treatment efficiency can be
markedly improved.

FIG.1

**Description**

Technical Field

The present invention relates to entrapping immobilization pellets, a wastewater treatment system and a wastewater treatment method, and particularly relates to a technique for performing operation with high treatment efficiency simply by adding entrapping immobilization pellets to a conventional biological treatment tank in which wastewater treatment is performed by use of activated sludge without modifying the conventional system.

Background Art

Wastewater treatment with activated sludge has been conventionally employed in a number of wastewater treatment plants. In the wastewater treatment method with activated sludge, wastewater is fed in a biological treatment tank having activated sludge suspended therein, aerated with air (or oxygen) and brought into be contact with the activated sludge. In this manner, components to be treated (e.g., ammonia) in wastewater are biologically treated. However, wastewater treatment with activated sludge has the following problem. Since high concentration of useful microorganisms for treating the components to be treated in the wastewater cannot be maintained to be high in the biological treatment tank, high load operation cannot be performed and treatment efficiency is low.

In this circumstance, attempts have recently been made to add entrapping immobilization pellets having microorganisms entrapped/immobilized therein to a biological treatment tank to enhance the concentration of useful microorganisms in a biological treatment tank, thereby increasing treatment efficiency.

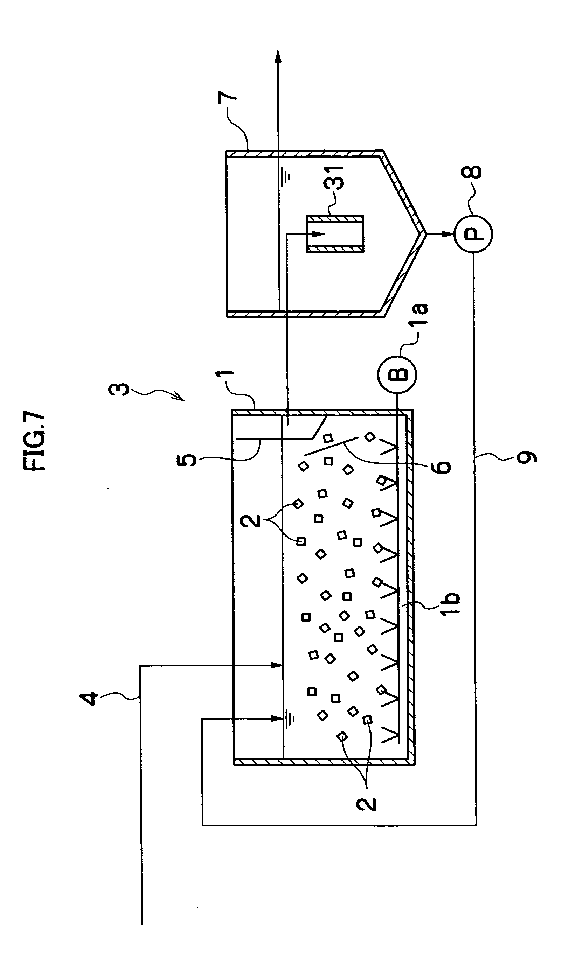

Figure 7 shows a general structure of a conventional wastewater treatment system 3 having entrapping immobilization pellets 2 added to a biological treatment tank 1. As shown in Figure 7, wastewater is fed through untreated wastewater pipe 4 to the biological treatment tank 1, to which entrapping immobilization pellets 2 are added, and a screen 5 for preventing discharge of the entrapping immobilization pellets 2 together with the wastewater is provided at the outlet for treated water of the biological treatment tank 1. Furthermore, a current plate 6 is provided below the screen 5, for arranging the direction and flow rate of the current of the treated water to suppress clogging of the screen 5 with the entrapping immobilization pellets 2. Furthermore, if the particle diameter of entrapping immobilization pellets 2 is too small, the screen 5 is clogged with them. To avoid clogging, the entrapping immobilization pellets 2 are usually formed so as to have a particle diameter of about 3 to 10 mm. If the size of sieve-opening of the screen 5 is reduced, discharge of small-diameter entrapping immobilization pellets 2 can be prevented; however, not only fine particles in the wastewater and sticky products produced by microorganisms are easy to attach to the screen 5 but also treated water is met with a lot of resistance when discharged. For these reasons, the idea of reducing the size of sieve-opening of the screen 5 is not practical.

The treated water is separated from the entrapping immobilization pellets 2 by the screen 5 and transferred to a solid-liquid separation tank 7, at which activated sludge is precipitated and separated. Part of activated sludge precipitate is returned to the biological treatment tank 1 by a pump 8 through a return pipe 9. Reference number 1a indicates a blower and 1 b indicates an aeration pipe for supplying air (or oxygen). The biological treatment tank having a screen is, for example, described in Japanese Patent Application Laid-Open No. 2004-148154.

Disclosure of the Invention

Problem to Be Solved by the Invention

(1) However, when a conventional biological treatment tank 1, in which wastewater is treated with activated sludge, is used for treatment with the entrapping immobilization pellets 2, there is the following problem: the screen 5 and a member for preventing clogging of the screen 5, such as the current plate 6, must be provided, that is, the system must be modified. When clogging cannot be prevented by the current plate 6 alone, an aeration means for cleaning the screen is sometimes provided below the screen 5. A large scale modification of the system is required.

(2) Further, the entrapping immobilization pellets 2 are carriers for entrapping and immobilizing microorganisms (such as activated sludge) in hydrophilic gel serving as an immobilization material. The smaller the particle diameter is, the larger the area of the particle comes into contact with wastewater. Therefore, treatment efficiency (primary advantage) of the entrapping immobilization pellets 2 can be increased.

In the aforementioned background, if the system is constructed without using the screen 2 in the biological treatment tank 1 and in such a manner that the entrapping immobilization pellets 2 are discharged together with treated water to the solid-liquid separation tank 7 and the entrapping immobilization pellets 2 thus discharged are returned to the biological treatment tank 1 by the pump 8 through the return pipe 9, a conventional system can be used as it is without any modification. In addition, entrapping immobilization pellets with small diameter can be used. Therefore, the aforementioned problems (1) and (2) can be solved simultaneously.

However, when the entrapping immobilization pellets 2 are returned to the biological treatment tank 1 by the pump 8 through the return pipe 9, the entrapping immobilization pellets 2 are broken by compression of the pump 8 and abrasion with return pipe 9, and so on. Therefore, such a system cannot be implemented at present.

The present invention was made in these circumstances. It is an object of the present is to provide entrapping immobilization pellets, which are less broken even if returned to a biological treatment tank by pumping, thereby enabling to use a conventional biological treatment tank for treating wastewater with activated sludge without modification, and which can be reduce in particle diameter, thereby markedly improving treatment efficiency, and to provide a wastewater treatment system and a wastewater treatment method.

Means for Solving the Problem

To attain the aforementioned object, a first aspect of the present invention provides entrapping immobilization pellets for wastewater treatment formed by polymerizing an immobilization material having microorganisms mixed therein, thereby entrapping and immobilizing the microorganisms in the immobilization material, the entrapping immobilization pellets satisfying conditions:

(A) a deformation rate expressed by $(H_0-H_1)/H_0$ is 70% or more, where the thickness of the pellets before compression is $H_0$ and the thickness of the pellets at the time the pellets are broken by compression is $H_1$; and
(B) a particle diameter falls within the range of 0.1 to 1.5 mm.

The present inventors intensively studied on entrapping immobilization pellets to be suitably used in a wastewater treatment system, which is constituted such that entrapping immobilization pellets are discharged together with treated water from a biological treatment tank having no screen to a solid-liquid separation tanks are returned to the biological treatment tank by pumping through a return pipe. As a result, they found that the object can be attained by use of entrapping immobilization pellets satisfying the aforementioned conditions (A) and (B).

More specifically, entrapping immobilization pellets less broken even if compressed by the pump and rubbed by the return pipe, and so on can be obtained by designing entrapping immobilization pellets so as to satisfy a deformation rate of 70% or more, which is expressed by

$$(H_0-H_1)/H_0 \times 100$$

where the thickness of the pellets before compression is $H_0$ and the thickness of the pellets at the time they are broken by compression is $H_1$, as well as by setting the particle diameter to be a small value ranging from 0.1 to 1.5 mm. Furthermore, the region where useful aerobic microorganisms such as nitrifying bacteria are living in general entrapping immobilization pellets ranges from the surface of the pellet to a depth of 1500 $\mu$m due to diffusion resistance of gel (an immobilization material polymerized and then gelatinized) (Journal of the Japan Sewage Works Association vol. 28, No. 334, p 50). Accordingly, the entrapping immobilization pellets, if they are reduced in size within the range of 0.1 to 1.5 mm, are not only less broken by pumping but also able to maintain useful aerobic microorganisms alive over the entrapping immobilization pellets. By virtue of this, biological treatment can be performed at high load on pellets and therefore the treatment efficiency can be dramatically improved. Note that it is more preferred that the deformation rate of the entrapping immobilization pellets is 80% or more.

According to a second aspect of the present invention, in the first aspect, a sedimentation rate of the entrapping immobilization pellets falls within the range of 0.02 to 3.7 cm/second.

This is for the reasons given below. To return the entrapping immobilization pellets to the biological treatment tank by pumping, it is necessary to efficiently precipitate the entrapping immobilization pellets. The entrapping immobilization pellets, if they are designed such that a sedimentation rate thereof falls within the range of 0.02 to 3.7 cm/second, can be easily separated by use of a conventional solid-liquid separation tank. Note that the sedimentation rate can be measured by a measurement method known in the art.

According to a third aspect of the present invention, in the first or second aspect, as the immobilization material, a prepolymer having a molecular weight ranging from 4000 to 12000 is used, and a concentration of the prepolymer per pellet falls within a range of 3 to 10 wt%.

The third aspect of the present invention is a preferable example for obtaining a deformation rate of the entrapping immobilization pellets of 70% or more. This is attained by defining the molecular weight and content of the immobilization material. Note that the molecular weight preferably falls within the range of 7000 to 11000 and the concentration per pellet falls within the range of 4 to 8 wt%.

According to a fourth aspect of the present invention, in any one of the first to third aspects, the microorganisms are activated sludge.

This is for the reasons given below. Although oxygen dissolved in the immobilization material inhibits polymerization, a polymerization reaction smoothly proceeds if the activated sludge is entrapped and immobilized to the immobilization material because activated sludge consumes oxygen. As a result, entrapping immobilization pellets having a high strength can be readily obtained. In particular, in the case where a prepolymer concentration is low as is in the third aspect, the polymerization is easily affected by oxygen. Since the effect can be reduced by using activated sludge, the deformation rate of the entrapping immobilization pellets can be further improved. In addition, entrapping immobilization of activated sludge enables to control the specific gravity of the entrapping immobilization pellets, that is, control the sedimentation rate. Accordingly, pure cultured microorganisms may be used as the microorganisms to be entrapped and immobilized; however, activated sludge is more preferably entrapped and immobilized.

To attain the aforementioned object, a fifth aspect of the present invention provides a wastewater treatment system comprising: a biological treatment tank to which the entrapping immobilization pellets according to any one of the first to fourth aspects are added and in which the entrapping immobilization pellets are brought into contact with the wastewater to biologically treat components to be treated in wastewater; a solid-liquid separation tank for precipitating and separating the entrapping immobilization pellets discharged from the biological treatment tank; and a pump provided to a return pipe connecting the solid-liquid separation tank and the biological treatment tank, in which the entrapping immobilization pellets discharged together with treated water from the biological treatment tank to the solid-liquid separation tank are returned to the biological treatment tank by the pump through the return pipe.

The fifth aspect is directed to a wastewater treatment system using the entrapping immobilization pellets according to any one of the first to fourth aspects and constituted such that the entrapping immobilization pellets discharged together with treated water from the biological treatment tank to the solid-liquid separation tank are returned to the biological treatment tank by the pump through the return pipe without providing a screen in the biological treatment tank. With this constitution, a conventional biological treatment tank for wastewater treatment with activated sludge can be used without modification. Besides this, the treatment efficiency can be markedly improved since the particle diameter thereof can be reduced. Note that, as a pump, a general pump may be used, and, for example, a centrifugal pump, a cascade pump, a piston pump, a plunger pump, a diaphragm pump, a screw pump, an eccentricity pump and air lift pump can be preferably used.

According to a sixth aspect of the present invention, in the fifth aspect, the entrapping immobilization pellets discharged from the biological treatment tank are precipitated and separated in the solid-liquid separation tank and returned to the biological treatment tank by the pump so as to prevent deposition of microorganisms on surface of the entrapping immobilization pellets.

When microorganisms are deposited on the surface of the entrapping immobilization pellets, oxygen and substrates do not penetrate into the interior of the entrapping immobilization pellets, and thus the performance thereof decreases. Besides, there is another effect. When large microorganisms such as vorticella deposit onto the immobilization material, the specific gravity of the entrapping immobilization pellets decreases and consequently the sedimentation rate decreases. According to the sixth aspect, when the entrapping immobilization pellets are returned to the biological treatment tank by a pump, the entrapping immobilization pellets can be in contact with each other, the microorganisms deposited on the surface of the entrapping immobilization pellets can be rubbed off.

According to a seventh aspect of the present invention, in the fifth aspect or sixth aspect, the entrapping immobilization pellets and activated sludge are present together in the biological treatment tank, and the entrapping immobilization pellets and the activated sludge discharged together with treated water to the solid-liquid separation tank are both returned to the biological treatment tank by the pump.

By virtue of this, the entrapping immobilization pellets are less broken since the activated sludge plays a role in protecting the entrapping immobilization pellets from compression and abrasion by returning both the entrapping immobilization pellets and activated sludge in a mixed state by the pump.

To attain the aforementioned object, an eighth aspect of the present invention provides a wastewater treatment method for biologically nitrifying ammonia-containing wastewater, including bringing entrapping immobilization pellets having nitrifying bacteria entrapped and immobilized therein and having a particle diameter ranging from 0.1 to 1.5 mm, into contact with the ammonia-containing wastewater so that load on the pellets falls within a range of 300 to 600 (mg-N/L·h).

As is described above, since useful microorganisms can be kept alive at a high concentration over the entrapping immobilization pellets by reducing the particle diameter of the entrapping immobilization pellets within the range of 0.1 to 1.5 mm, biological treatment can be performed at high load on the pellets. The eighth aspect of the present invention is applied to nitrification treatment of ammonia-containing wastewater. The entrapping immobilization pellets with nitrifying bacteria entrapped and immobilized therein and having a particle diameter ranging from 0.1 to 1.5 mm are brought into contact with ammonia-containing wastewater so that the load on the pellets falls within the range of 300 to 600 (mg-N/L·h). If the load on the pellets is within the range of 300 to 600 (mg-N/L·h), nitrification treatment can be performed at a nitrification rate of almost 100%, thereby dramatically increasing treatment efficiency. Advantageous Effect of the Invention

As is described above, the entrapping immobilization pellets of the present invention are less broken even if they are transferred by a pump. Therefore, it is possible to construct a wastewater treatment system without providing a screen for preventing pellets from discharging to the biological treatment tank. Besides this, since the particle diameter can be reduced, the treatment efficiency can be markedly improved. Accordingly, a highly efficient wastewater treatment system and method can be constituted simply by introducing the entrapping immobilization pellets of the present invention to a conventional biological treatment tank in which wastewater treatment is performed with activated sludge.

Brief Description of the Drawings

Figure 1 is a schematic view of the wastewater treatment system of the present invention;
Figure 2 is a graph showing the relationship between the molecular weight of a prepolymer serving as an immobilization material for use in entrapping immobilization and the deformation rate;
Figure 3 is a graph showing the relationship between the concentration of a prepolymer per pellet and the deformation rate;
Figure 4 is a graph showing the relationship between the particle diameter of a pellets and the activity;
Figure 5 is a graph showing the relationship between the load applied on pellets and the nitrification rate in the entrapping immobilization pellets of the present invention and conventional entrapping immobilization pellets;
Figure 6 is a conceptual view of a modified example of the wastewater treatment system of the present invention; and
Figure 7 is a schematic view of a conventional wastewater treatment system equipped with a screen.

Description of Symbols

| 10, 10' | wastewater treatment system |
| 12 | Entrapping immobilization pellets |
| 14 | Biological treatment tank |
| 16 | Solid-liquid separation tank |
| 18 | Return pipe |
| 20 | Pump |
| 22 | Untreated water pipe |
| 24 | Aeration pipe |
| 26 | Air pipe |
| 28 | Blower |
| 30 | Liquid feed pipe |
| 32 | Treated water pipe |
| 34 | activated sludge |

Best Mode for Carrying Out the Invention

Preferred embodiments of the entrapping immobilization pellets, wastewater treatment system and wastewater treatment method according to the present invention will be described more specifically with reference to the accompanying drawings, below.

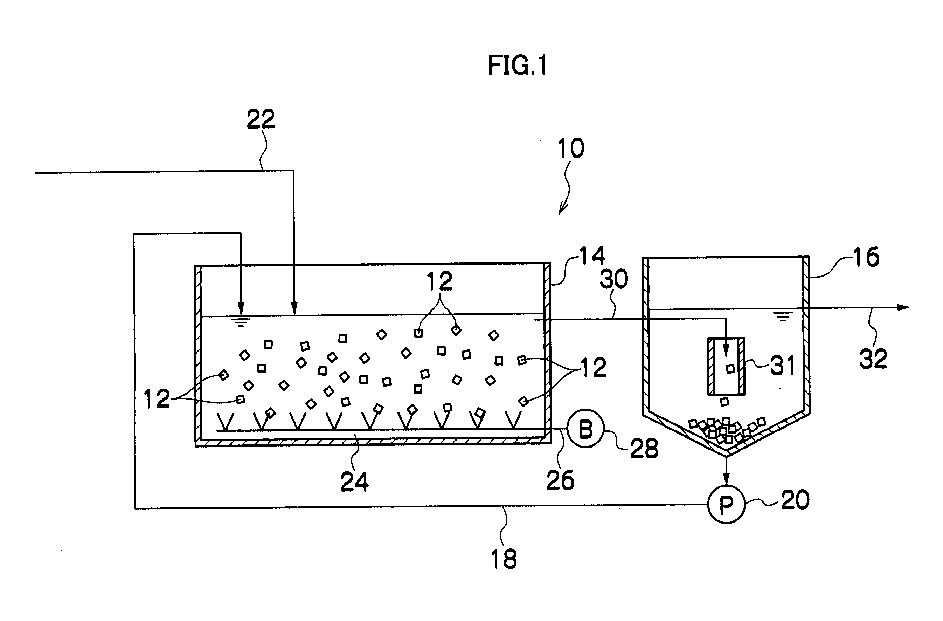

Figure 1 is a schematic view of the wastewater treatment system of the present invention and shows an example of the wastewater treatment system for biologically nitrifying nitrogen components (e.g., ammonia) in wastewater under aerobic conditions.

As shown in Figure 1, a wastewater treatment system 10 is mainly constructed of a biological treatment tank 14 for biologically treating the components to be treated in wastewater by bringing a large number of entrapping immobilization pellets 12 and wastewater into contact with each other; a solid-liquid separation tank 16 for precipitating and separating the entrapping immobilization pellets 12 discharged from the biological treatment tank 14; and a pump 20 provided to a return pipe 18 connecting the solid-liquid separation tank 16 and the biological treatment tank 14. The biological treatment tank 14 of the wastewater treatment system 10 has no screen for preventing discharge of the entrapping immobilization pellets 12.

Into the biological treatment tank 14, wastewater containing nitrogen components flows through an untreated water pipe 22 and comes into contact with the entrapping immobilization pellets 12 having nitrifying bacteria entrapped and immobilized therein. Furthermore, at the bottom of the biological treatment tank 14, an aeration pipe 24 is provided, which is connected to a blower 28 through an air pipe 26. With this constitution, air is supplied from the aeration pipe 24 and creates aerobic conditions in the biological treatment tank 14. When the entrapping immobilization pellets 12 and wastewater come into contact with each other under the aerobic conditions, the nitrogen components of the wastewater are nitrified (oxidized) by nitrifying bacteria (microorganisms) entrapped/immobilized in the entrapping immobilization pellets 12. The treated water obtained in the biological treatment tank 14 is fed to the solid-liquid separation tank 16 through a liquid feed pipe 30, and a part of the entrapping immobilization pellets 12 is discharged together with the treated water to the solid-liquid separation tank 16. In the solid-liquid separation tank 16, the supernatant is fed as the treated water to the next step through a treated water pipe 32, whereas the entrapping immobilization pellets 12 precipitate by gravity and deposit on the bottom of the solid-liquid separation tank 16. The entrapping immobilization pellets 12 depositing on the bottom of the solid-liquid separation tank 16 are returned to the biological treatment tank 14 through the return pipe 18 by operation of the pump 20. At the center of the solid-liquid separation tank 16, an upright cylinder 31 having open ends at the top and bottom is vertically provided and the tip of the liquid-feed pipe 30 is extended into the cylinder 31. With this structure, the entrapping immobilization pellets 12 discharged from the biological treatment tank 14 to the solid-liquid separation tank 16 precipitate on the bottom of the solid-liquid separation tank 16 without scattering in solid-liquid separation tank 16.

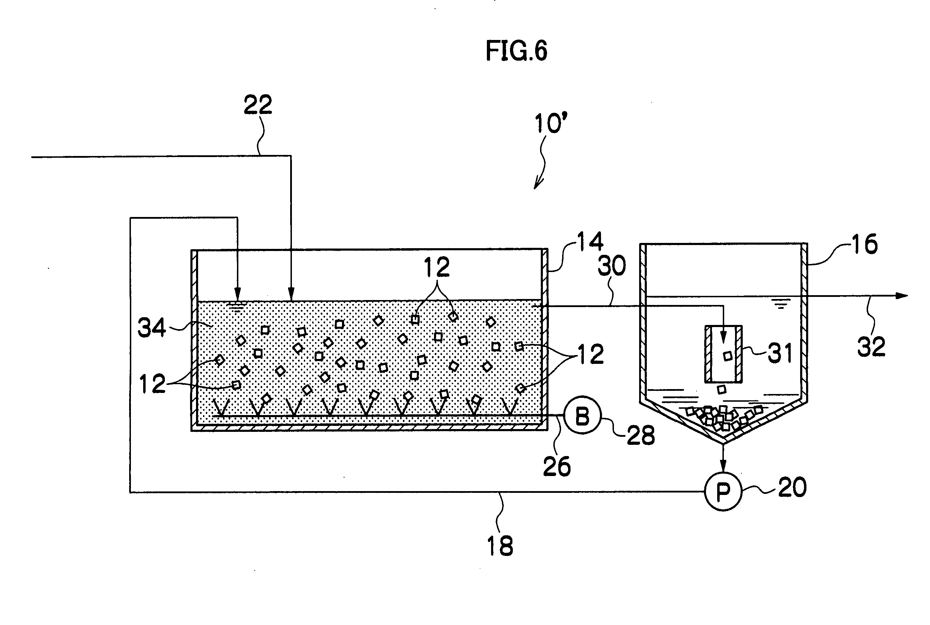

As is described above, when the entrapping immobilization pellets 12, which are discharged from the biological treatment tank 14 having no the screen (reference numeral 5 of Figure 6) at a treated water outlet for preventing discharge of the pellets to the solid-liquid separation tank 16, together with treated water, are returned to the biological treatment tank 14 by the pump 20, it is important that the entrapping immobilization pellets 12 are less broken by pumping. To this end, the entrapping immobilization pellets 12 of the present invention are introduced to the biological treatment tank 14.

The entrapping immobilization pellets 12 of the present invention are prepared by mixing microorganisms with an immobilization material and polymerizing the immobilization material, thereby entrapping and immobilizing the microorganisms therein. It is important for the entrapping immobilization pellets 12 to satisfy the conditions: a deformation rate of 70% or more and a particle diameter ranging from 0.1 to 1.5 mm. The deformation rate of the entrapping immobilization pellets 12 refers to a value expressed by the following equation (1):

The deformation rate of

$$\text{entrapping immobilization pellets (\%)} = (H_0 - H_1)/H_0 \times 100 \ ... \ (1)$$

where $H_0$ is the thickness (mm) of the pellets before compression, and $H_1$ is the thickness (mm) of the pellets at the time gel of the pellets is broken when the entrapping immobilization pellets 12 are compressed at a predetermined force by a compressor, for example, a rheometer. For example, a deformation rate of 70% means that the entrapping immobilization pellets 12 can be compressed up to 70% of the initial thickness thereof and broken if compressed further.

As is described above, the entrapping immobilization pellets 12, which are less broken even if compressed by the pump 20 and rubbed within the return pipe 18, etc., can be obtained by forming the entrapping immobilization pellets 12 having a deformation rate of 70% or more and further preferably 80% or more.

As a method of obtaining the entrapping immobilization pellets 12 having a deformation rate of 70% or more, it is preferred to employ a method in which an immobilization material containing a prepolymer having a molecular weight ranging from 4000 to 12000 is used and a concentration of the prepolymer per pellet is controlled to be 3 to 10 wt%.

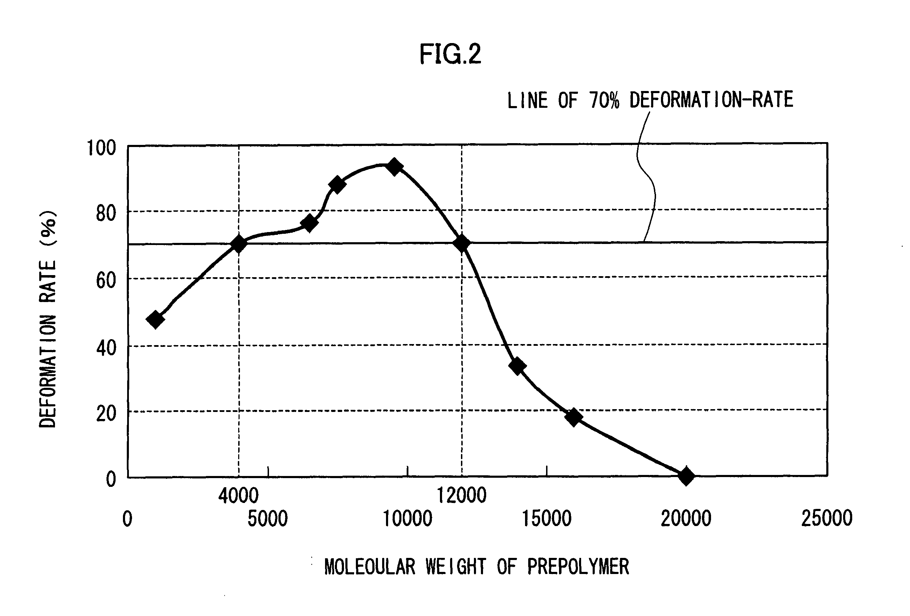

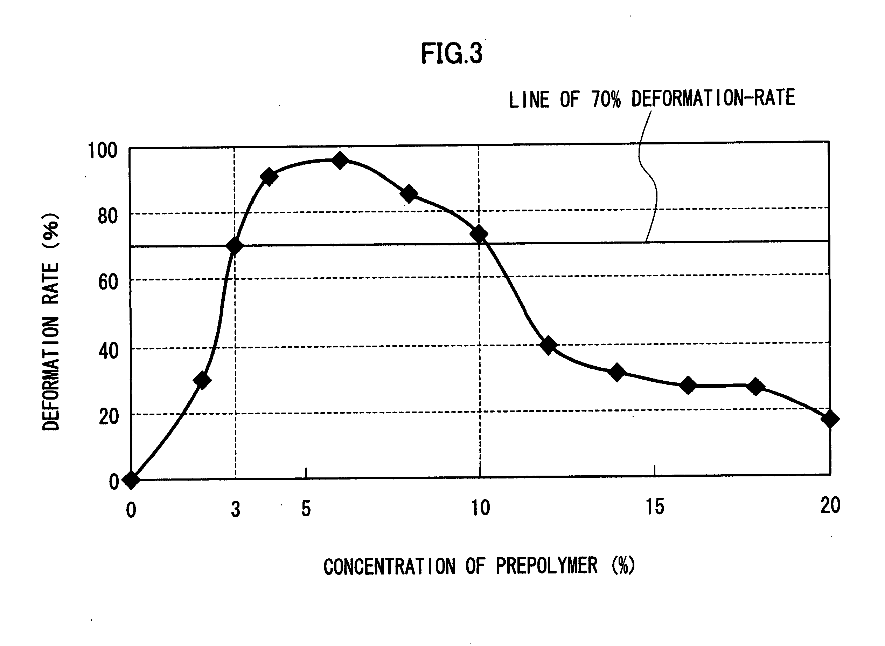

Figure 2 is a graph showing the relationship between the molecular weight of the prepolymer and the deformation rate of pellet and Figure 3 is a graph showing the relationship between the concentration of a prepolymer per pellet and the deformation rate of pellet.

As is apparent from Figure 2, as the molecular weight of the prepolymer increases, the deformation rate gradually increases and elasticity increases. The deformation rate reaches a peak at the molecular weight of about 10000, and thereafter, sharply decreases. This is considered as follows. When the molecular weight of the prepolymer increases, the deformation rate tends to increase. However, the molecular weight becomes excessively large, it becomes difficult for the prepolymer to gelatinize. As a result, the pellet decreases in strength, and becomes easy to break. Consequently, the deformation rate decreases. The deformation rate of 70% or more can be ensured when the molecular weight falls within the range of 4000 to 12000.

As is apparent from Figure 3, as the concentration of the prepolymer increases, the deformation rate gradually increases and elasticity increases. The deformation rate reaches a peak at a prepolymer concentration of 6 to 7 wt%, and thereafter, gradually decreases. This is considered as follows. When the prepolymer concentration is less than 3 wt%, gelatinization does not sufficiently proceed and thus the deformation rate is low. On the other hand, when the prepolymer concentration exceeds 8 wt%, the number of crosslinks in the gel increases and polymerization proceeds strongly. As a result, prepolymer becomes hard but fragile. Consequently, the deformation rate decreases.

As is described above, to increase the deformation rate of the entrapping immobilization pellets 12, it is necessary to appropriately control the molecular weight of the prepolymer and concentration thereof per pellet. By the control, the number of crosslinks formed in the gel can be set appropriately. As a result, the entrapping immobilization pellets 12 having good elasticity can be obtained. Furthermore, a deformation rate of 70% or more can be ensured by using a prepolymer having a molecular weight ranging from 4000 to 12000 and by setting concentration of prepolimer per pellet from 3 to 10 wt%. Moreover, when the particle diameter of the entrapping immobilization pellets 12 is controlled to fall within the range of 0.1 to 1.5 mm, the performance of treatment (described later) can be improved and the entrapping immobilization pellets 12 become to be less broken by pumping.

As the base prepolymer serving as an immobilization material and the crosslinking agent, the following compounds can be suitably used.

Monomethacrylates such as polyethylene glycol monomethacrylate, polyprene glycol monomethacrylate, polypropylene glycol monomethacrylate, methoxydiethylene glycol methacrylate, methoxypolyethylene glycol methacrylate, methacryloyloxyethyl hydrogenphthalate, methacryloyloxyethyl hydrogensuccinate, 3-chloro-2-hydroxypropyl methacrylate, stearyl methacrylate, 2-hydroxy methacrylate and ethyl methacrylate;

monoacrylates such as 2-hydroxyethyl acrylate, 2-hydroxypropyl acrylate, isobutyl acrylate, t-butyl acrylate, isooctyl acrylate, lauryl acrylate, stearyl acrylate, isobornyl acrylate, cyclohexyl acrylate, methoxy triethylene glycol acrylate, 2-ethoxyethyl acrylate, tetrahydrofurfuryl acrylate, phenoxyethyl acrylate, nonylphenoxy polyethylene glycol acrylate, nonylphenoxy polypropylene glycol acrylate, silicon-modified acrylate, polypropylene glycol monoacrylate, phenoxyethyl acrylate, phenoxy diethylene glycol acrylate, phenoxy polyethylene glycol acrylate, methoxy polyethylene glycol acrylate, acryloyloxyethyl hydrogensuccinate and lauryl acrylate;

dimethacrylates such as 1,3-butylene glycol dimethacrylate, 1,4-butanediol dimethacrylate, ethylene glycol dimethacrylate, diethylene glycol dimethacrylate, triethylene glycol dimethacrylate, polyethylene glycol dimethacrylate, butylene glycol dimethacrylate, hexanediol dimethacrylate, neopentyl glycol dimethacrylate, polypropylene glycol dimethacrylate, 2-hydroxy-1,3-dimethacryloxypropane, 2,2-bis-4-methacryloxyethoxyphenyl propane, 3,2-bis-4-methacryloxydiethoxyphenyl propane and 2,2-bis-4-methacryloxypolyethoxyphenyl propane;

diacrylates such as ethoxylated neopentyl glycol diacrylate, polyethylene glycol diacrylate, 1,6-hexanediol diacrylate, neopentyl glycol diacrylate, tripropylene glycol diacrylate, polypropylene glycol diacrylate, 2,2-bis-4-acryloxyethoxyphenylpropane, and 2-hydroxy-1-acryloxy-3-methacryloxypropane;

trimethacrylates such as trimethylolpropane trimethacrylate;

triacrylates such as trimethylolpropane triacrylate, pentaerythritol triacrylate, trimethylolpropane EO-added triacrylate, glycerin PO-added triacrylate and ethoxylated trimethylol propane triacrylate;

tetraacrylates such as pentaerythritol tetraacrylate, ethoxylated pentaerythritol tetraacrylate, propoxylated pentaerythritol tetraacrylate and ditrimethylolpropane tetraacrylate;

urethane acrylates such as urethane acrylate, urethane dimethyl acrylate and urethane trimethyl acrylate; and

other compounds such as acrylamide, acrylic acid and dimethylacrylamide.

As the polymerization of the present invention, radical polymerization using potassium persulfate is the most suitable; however, polymerization using UV rays and electron beams and redox polymerization may be used. In the case of polymerization using potassium persulfate, the addition amount of potassium persulfate is preferably 0.001 to 0.25% and an amine-base polymerization accelerator may be added in an amount of 0.001 to 0.5%. Example of the amine-base polymerization accelerator may include β-dimethylaminopropionitrile, N,N,N',N'-tetramethylethylenediamine and sodium sulfite.

As the microorganisms to be entrapped/immobilized in the prepolymer, pure cultured microorganisms may be used; however, activated sludge is preferably entrapped/immobilized for the reason below. Although oxygen dissolved in the prepolymer inhibits polymerization, if activated sludge is entrapped/immobilized therein, the activate sludge consumes oxygen, helping the polymerization to smoothly proceed. As a result, strong entrapping immobilization pellets 12 can be easily obtained. In particular, in the case where the prepolymer concentration is as low as 3 to 10 wt%, like the present invention, polymerization is susceptible to oxygen. Since the effect can be mitigated by use of activated sludge, the deformation rate of the entrapping immobilization pellets 12 can be further enhanced. Furthermore, the specific gravity of the entrapping immobilization pellets 12 can be controlled by entrapping and immobilizing the activated sludge.

The sedimentation rate of the entrapping immobilization pellets 12 preferably falls within the range of 0.02 to 3.7 cm/second for the reason below. Even if the particle diameter of the entrapping immobilization pellets 12 is as low as 0.1 to 1.5 mm, if a sedimentation rate is set at 0.02 to 3.7 cm/second by controlling the specific gravity, the entrapping immobilization pellets 12 can be easily separated from treated water by gravity in the solid-liquid separation tank 16. As the specific gravity controlling agent for the entrapping immobilization pellets 12, activated sludge, magnetite, fry-ash, iron powder, activated carbon, silica, etc. may be preferably used.

Furthermore, when the particle diameter of the entrapping immobilization pellets 12 is reduced within the range of 0.1 to 1.5 mm, the substrates and oxygen can penetrate into the center potions of the entrapping immobilization pellets 12 and nitrifying bacteria (useful microorganisms) can easily proliferate. As a result, a reaction rate per pellet can be significantly increased. By virtue of this, nitrogen components of wastewater can be treated at high load on pellets.

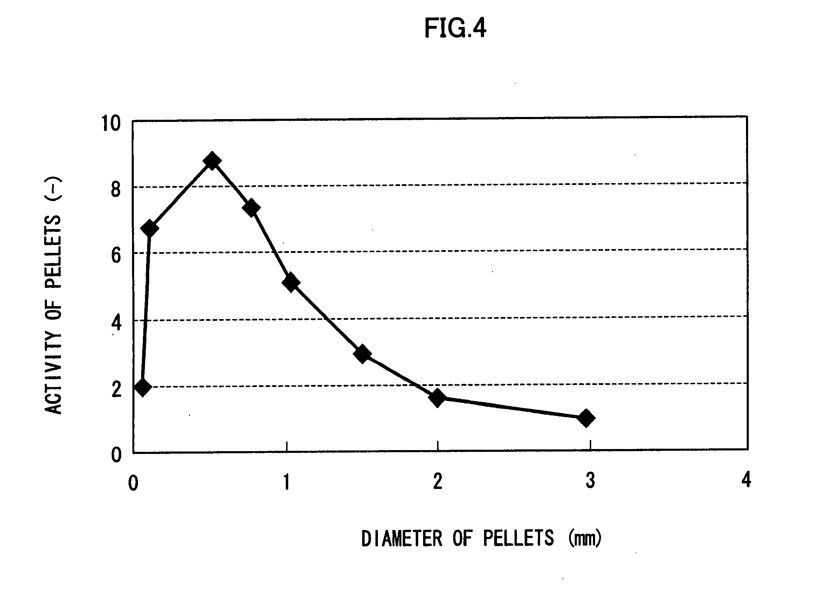

In the entrapping immobilization pellets of the present invention, the smaller the particle diameter, the larger the surface area of the entrapping immobilization pellets. As a result, activity of the entrapping immobilization pellets per unit volume improves. Then, entrapping immobilization pellets different in particle diameter were added to activated sludge in an amount of 10% by mass for each and the relationship between the particle diameter of the entrapping immobilization pellets and activity thereof was evaluated. The activity of the entrapping immobilization pellets was represented by respiration rate per pellet. The respiration rate was obtained as follows. Predetermined amounts of water containing DO (dissolved oxygen) and the entrapping immobilization pellets were added to a bottle and the bottle was closed airtight. DO was measured by a DO meter to obtain change of DO and then the respiration rate was calculated. The activity of the entrapping immobilization pellets is expressed by a relative ratio assuming that the activity of the entrapping immobilization pellets of about 3 mm squares is regarded as 1. The results are shown in Figure 4.

As shown in Figure 4, as the particle diameter of the entrapping immobilization pellets reduces, the activity improves. Particularly, at a particle diameter of 1.5 mm or less, an improving rate of the activity was high. This is considered because the surface area per unit volume of the pellets increases and, in addition, oxygen and the substrates become easily to reach the center portions of the entrapping immobilization pellets. However, at an entrapping immobilization pellet particle diameter of less than 1.0 mm, the activity was low. This is considered because the entrapping immobilization pellets are incorporated in the flock of activated sludge present together, and the contact efficiency of the pellets with oxygen and the substrates decreases. For the reason, the particle diameter of the entrapping immobilization pellets preferably falls within the range of 0.1 to 1.5 mm.

The entrapping immobilization pellets of the present invention must be separable in a conventional solid-liquid separation tank. The separability depends upon sedimentation rate of the entrapping immobilization pellets. Usually, the surface loading of the solid-liquid separation tank for separating sludge from treated water is defined to be 15 to 25 $m^3/m^2 \cdot d$ (Sewage Works Facility Plan/Design Policy and Explanation, annual edition, latter part, 2001, p 82, published by the Japan Sewage Works Association). This corresponds to 0.02 to 0.03 cm/second in terms of an upward flow rate. Therefore, to separate the entrapping immobilization pellets by sedimentation, it is necessary to set the sedimentation rate at not less than 0.02 cm/second. Furthermore, usually, to migrate the entrapping immobilization pellets in an aeration tank, the sedimentation rate is preferably set at not more than 3.7 cm/second. In other words, when the sedimentation rate exceeds 3.7 cm/second, the flowability of the entrapping immobilization pellets decreases and the performance thereof decreases.

For the reasons mentioned above, the sedimentation rate of the entrapping immobilization pellets is preferably set at 0.02 to 3.7 cm/second.

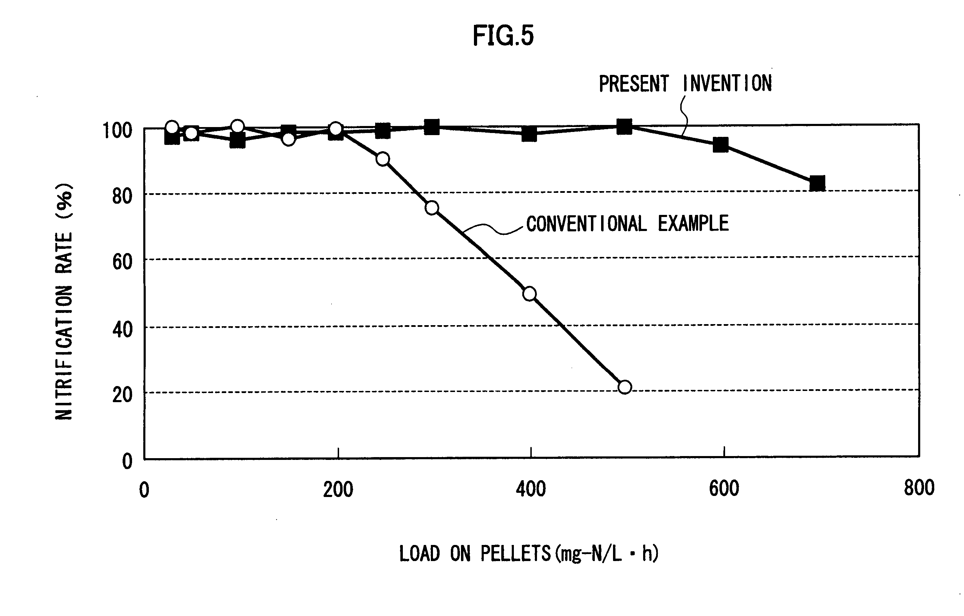

Figure 5 shows the relationship between the load on pellets and the nitrification rate, which was examined by using a miniaturized experimental system of the wastewater treatment system 10 of Figure 1, in which wastewater containing ammonia in a concentration of 100 mg/L was nitrified by the entrapping immobilization pellets 12 (the present invention) having a particle diameter of 1.0 mm and having nitrification bacteria entrapped and immobilized therein. In addition, degree of breakage of the entrapping immobilization pellets 12 was examined when the entrapping immobilization pellets 12 were pumped from the solid-liquid separation tank 16 to the biological treatment tank 14.

As a comparative experiment, using a miniaturized experimental system of the conventional wastewater treatment system 3 (see Figure 7) having a screen, wastewater containing ammonia in a concentration of 100 mg/L was nitrified by conventional entrapping immobilization pellets 2 (a conventional example) having a particle diameter of 3.0 mm and having nitrification bacteria entrapped and immobilized therein. The relationship between the load on pellets and the nitrification rate in that comparative experiment was examined.

In the entrapping immobilization pellets 12 of the present invention, a polyethylene glycol molecular-weight is 9500 and a concentration of material is 5 wt%. On the other hand, in the entrapping immobilization pellets 2 according to a conventional example, a polyethylene glycol molecular-weight is 4000 and a concentration of material is 10 wt%. Note that the concentration of nitrifying bacteria in entrapping immobilization pellets to be added to the biological treatment tank 14 was set at the same value both in the present invention and in the comparative example. As a specific-gravity controlling agent, magnetite was used and the sedimentation rate of the entrapping immobilization pellets was set at the same value of 2 cm/second both in the present invention and in the conventional example.

The volume of the biological treatment tank 14 was set at 2L both in the present invention and the conventional example. To the biological treatment tank 12 was packed with the entrapping immobilization pellets 12 alone at a loading volume of 5 vol% without adding activated sludge. The load on pellet was increased by increasing the amount of wastewater fed to the biological treatment tank 14.

As is apparent from Figure 5, the nitrification rate of the entrapping immobilization pellets 12 of the present invention was about 100% up to a load on pellet as large as 500 (mg-N/L·h). When the load on pellet is further increased, the nitrification rate gradually decreased. Nevertheless, the nitrification rate was successfully maintained at high level, for example, 94% at a load on pellet of 600 (mg-N/L·h) and 80% at a load on pellet of 700 (mg-N/L·h). In addition, treatment was successfully and continuously performed without a breakage of the entrapping immobilization pellets 12 by pumping. Accordingly, in the wastewater treatment method for biologically nitrifying nitrogen components of wastewater under aerobic conditions, the entrapping immobilization pellets 12 of the present invention are brought into contact with wastewater such that a load on pellet falls within the range of 300 to 600 (mg-N/L·h). In this manner, high-concentration nitrogen components can be treated in a short time.

On the other hand, in the entrapping immobilization pellets 2 of the conventional example, a nitrification rate of 100% was maintained until a load on pellet reached 200 (mg-N/L·h). However, when the load on pellet exceeded 200 (mg-N/L·h), the nitrification rate sharply decreased. The nitrification rate was about 20% at a load on pellet of 500 (mg-N/L·h).

From the results of Figure 5, it is found that when the particle diameter of the entrapping immobilization pellets satisfy the range from 0.1 to 1.5 mm, the entrapping immobilization pellets can exhibit maximum treatment performance (nitrification performance in this case). Since the deformation rate of the entrapping immobilization pellets can be increased to as large a value as 70% or more, the pellets can be returned by pumping. In this way, the wastewater treatment system 10 can be constituted without a screen, which was required in conventional techniques.

Accordingly, wastewater treatment with a high start-up rate and with high resistance against load change can be implemented simply by introducing the entrapping immobilization pellets 12 of the present invention to a conventional biological treatment tank having no screen, which is used for treating wastewater by activated sludge, and operating the biological treatment tank.

Figure 6 shows a modified example of a wastewater treatment system 10' of the present invention. In the biological treatment tank 14, the entrapping immobilization pellets 12 of the present invention and activated sludge 34 (shaded in Figure 6) are both present. Note that other structural elements are the same as those of Figure 1, and any further explanation is omitted.

As shown in Figure 6, when the entrapping immobilization pellets 12 of the present invention and activated sludge 34 are both present in the biological treatment tank 14, the entrapping immobilization pellets 12 of the present invention and activated sludge 34 are both discharged together with the treated water from the biological treatment tank 14 to the solid-liquid separation tank 16 and precipitate on the bottom of the solid-liquid separation tank 16. The sedimentation containing both the entrapping immobilization pellets 12 and the activated sludge 34 on the bottom of the solid-liquid separation tank 16 is returned to the biological treatment tank 14 by means of a pump 20. At this time, the activated sludge 34 plays a role in preventing the entrapping immobilization pellets 12 from compression and abrasion and thus the entrapping immobilization pellets 12 are less broken.

Note that in this embodiment of the present invention, as described in the example of the entrapping immobilization pellets for treating nitrogen components, the present invention can be applied to entrapping immobilization pellets which entrap and immobilize useful microorganisms capable of treating components to be treated other than nitrogen components.

**Claims**

1. Entrapping immobilization pellets for wastewater treatment formed by polymerizing an immobilization material having microorganisms mixed therein, thereby entrapping and immobilizing the microorganisms in the immobilization material,

   the entrapping immobilization pellets satisfying conditions:

   (A) a deformation rate expressed by $(H_0-H_1)/H_0 \times 100$ is 70% or more, where the thickness of the pellets before compression is $H_0$ and the thickness of the pellets at the time the pellets are broken by compression is $H_1$; and
   (B) a particle diameter falls within the range of 0.1 to 1.5 mm.

2. The entrapping immobilization pellets for wastewater treatment according to claim 1, wherein
   a sedimentation rate of the entrapping immobilization pellets falls within the range of 0.02 to 3.7 cm/second.

3. The entrapping immobilization pellets according to claim 1 or 2, wherein
   as the immobilization material, a prepolymer having a molecular weight ranging from 4000 to 12000 is used, and
   a concentration of the prepolymer per pellet falls within a range of 3 to 10 wt%.

4. The entrapping immobilization pellets according to any one of claims 1 to 3, wherein

the microorganisms are activated sludge.

5.  A wastewater treatment system comprising:

a biological treatment tank to which the entrapping immobilization pellets according to any one of claims 1 to 4 are added and in which the entrapping immobilization pellets are brought into contact with the wastewater to biologically treat components to be treated in wastewater;
a solid-liquid separation tank for precipitating and separating the entrapping immobilization pellets discharged from the biological treatment tank; and
a pump provided to a return pipe connecting the solid-liquid separation tank and the biological treatment tank, wherein
the entrapping immobilization pellets discharged together with treated water from the biological treatment tank to the solid-liquid separation tank are returned to the biological treatment tank by the pump through the return pipe.

6.  The wastewater treatment system according to claim 5, wherein
the entrapping immobilization pellets discharged from the biological treatment tank are precipitated and separated in the solid-liquid separation tank and returned to the biological treatment tank by the pump so as to prevent deposition of microorganisms on surface of the entrapping immobilization pellets.

7.  The wastewater treatment system according to claim 5 or 6, wherein
in the biological treatment tank, the entrapping immobilization pellets and activated sludge are present together and the entrapping immobilization pellets and the activated sludge discharged together with treated water to the solid-liquid separation tank are both returned to the biological treatment tank by the pump.

8.  A wastewater treatment method for biologically nitrifying nitrogen components in wastewater under aerobic conditions, including
bringing entrapping immobilization pellets having nitrifying bacteria entrapped and immobilized therein and having a particle diameter ranging from 0.1 to 1.5 mm, into contact with the wastewater so that load on pellets falls within a range of 300 to 600 (mg-N/L·h).

# FIG.1

EP 2 039 659 A1

# FIG.2

LINE OF 70% DEFORMATION-RATE

MOLECULAR WEIGHT OF PREPOLYMER

EP 2 039 659 A1

## FIG.3

LINE OF 70% DEFORMATION-RATE

DEFORMATION RATE (%)

CONCENTRATION OF PREPOLYMER (%)

EP 2 039 659 A1

# FIG.4

EP 2 039 659 A1

FIG.5

EP 2 039 659 A1

FIG.6

EP 2 039 659 A1

FIG.7

<div align="center">**INTERNATIONAL SEARCH REPORT**</div>

| | International application No. |
|---|---|
| | PCT/JP2006/313473 |

**A. CLASSIFICATION OF SUBJECT MATTER**
*C02F3/34*(2006.01)i, *C02F3/10*(2006.01)i, *C02F3/12*(2006.01)i

According to International Patent Classification (IPC) or to both national classification and IPC

**B. FIELDS SEARCHED**

Minimum documentation searched (classification system followed by classification symbols)
C02F3/34, C02F3/10, C02F3/12

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2004-033809 A  (Fuji Photo Film Co., Ltd.), 05 February, 2004 (05.02.04), Claim 1; Par. Nos. [0023], [0028] (Family: none) | 1-8 |
| A | JP 2006-061097 A  (Hitachi Plant Engineering & Construction Co., Ltd.), 09 March, 2006 (09.03.06), Claims 1, 3; Par. No. [0038] (Family: none) | 1-8 |

☐ Further documents are listed in the continuation of Box C.       ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 26 July, 2006 (26.07.06) | 08 August, 2006 (08.08.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004148154 A

**Non-patent literature cited in the description**

- *Journal of the Japan Sewage Works Association,* vol. 28 (334), 50